# DEMANDE DE BREVET EUROPEEN

(11) **EP 1 645 724 A2**
(43) Date de publication de la demande: **12.04.2006**
(21) Numéro de dépôt: 05291459.5
(22) Date de dépôt: 06.07.2005
(51) Int. Cl.: F01D 5/30, F01D 5/28, C10M 103/02

(54) **PROCEDE DE PROTECTION DES SURFACES DE CONTACT ENTRE DEUX PIECES METALLIQUES**

(30) Priorité: 07.07.2004 FR 0407521
(71) Demandeur: SNECMA MOTEURS, 75015 Paris (FR)
(72) Inventeur: Lesnevskiy, Leonid, 129278 Moscow (RU); Troshin, Alexander, 121352 Moscow (RU); Vigneau, Joel, 91750 Chamcueil (FR)
(74) Mandataire: Barbin le Bourhis, Joel

(57) **Abrégé**

Protection des surfaces de contact de deux pièces métalliques sujettes à des mouvements relatifs.

Le procédé consiste à recouvrir au moins l'une desdites surfaces d'un matériau auto-lubrifiant composite (22) constitué exclusivement de particules de graphite (12) reparties dans une matrice de nickel (13).

## Description

L'invention se rapporte à un procédé de protection des surfaces de contact entre deux pièces métalliques sujettes à des déplacements relatifs de faible amplitude. Elle vise tout particulièrement le domaine des turboréacteurs et notamment l'assemblage entre les aubes et le disque-rotor de la soufflante, les pieds d'aubes étant retenus dans des alvéoles définies à la périphérie du disque. L'invention concerne aussi un compresseur, voir une soufflante de turboréacteur, pourvu d'une telle protection.

Dans un moteur d'avion, il est connu de lutter contre l'usure, provoquée par les mouvements de faible amplitude entre le disque rotor et les pieds d'aubes de la soufflante, grâce à un revêtement de CuNiln sur les portées des pieds d'aubes qui sont en contact avec les surfaces internes des alvéoles du disque dans lesquelles sont engagés lesdits pieds d'aubes. Cette technologie n'est plus adaptée aux moteurs les plus récents où les aubes sont plus fortement chargées. L'usure du revêtement utilisé jusqu'à présent est trop rapide et on observe une dégradation des pièces en contact, notamment les portées du disque. Celui-ci risque de se fissurer, ce qui peut avoir pour conséquence l'éclatement du disque lui-même.

L'invention est le résultat de recherches sur un nouveau type de revêtement plus résistant susceptible de remplacer le revêtement de CuNiln. Dans un domaine technique différent, à savoir celui des moteurs à piston, il est connu de traiter la surface interne de l'alésage par un dépôt d'une couche de matériau auto-lubrifiant composée de particules d'un mélange de bisulfure de molybdène et de graphite, lesdites particules étant réparties dans une matrice de nickel. Ce mélange lubrifiant décrit dans le brevet US 5,358,753 convient pour lutter contre une usure provoquée par un déplacement relatif important entre les deux pièces en contact, à savoir le piston et la chemise de piston. L'invention propose une autre formulation de lubrifiant solide, mieux adaptée à une usure du type "fretting" provoquée par des déplacements de petite amplitude entre les pièces en contact.

Plus particulièrement, l'invention concerne un procédé de protection des surfaces de contact entre deux pièces métalliques sujettes à des mouvements relatifs de faible amplitude, caractérisé en ce qu'il comporte une opération consistant à recouvrir au moins l'une desdites surfaces d'un matériau auto-lubrifiant composite constitué exclusivement de particules de graphite réparties dans une matrice de nickel.

Un tel matériau auto-lubrifiant sera déposé au moins sur les zones de contact des pieds d'aubes engagés dans les alvéoles du disque-rotor de la soufflante.

L'application peut se faire par mise en oeuvre d'une projection thermique classique de poudre, les grains de ladite poudre étant constitués de particules de graphite enrobées de nickel. Avantageusement, ladite projection thermique est une projection plasma.

Dans une turbo-soufflante, le substrat métallique sur lequel on applique le matériau auto-lubrifiant (sur le pied d'aube) est généralement en alliage de titane. L'adhérence du matériau auto-lubrifiant défini ci-dessus est en principe satisfaisante. Cependant, si on veut améliorer cette adhérence on peut appliquer sur la surface à recouvrir une sous-couche d'adhérence, avant application dudit matériau auto-lubrifiant. Cette sous-couche d'adhérence peut être par exemple du nickel-aluminium. Ce matériau adhère généralement bien sur n'importe quel substrat métallique. Il peut être appliqué par projection thermique et présente dans ce cas une morphologie favorable à l'accrochage d'autres matériaux projetés et notamment le matériau auto-lubrifiant de nickel-graphite.

Le procédé peut être complété par une opération consistant à projeter sur la surface dudit matériau auto-lubrifiant composite un autre matériau lubrifiant solide qui peut être, par exemple, du bisulfure de molybdène ou du graphite. Ce lubrifiant solide supplémentaire forme une couche continue très favorable à la réduction des frottements. Cette couche adhère bien sur le matériau auto-lubrifiant composite nickel-graphite en raison de la morphologie de ce dépôt qui comporte une certaine porosité.

La projection thermique des différents matériaux indiqués ci-dessus peut être effectuée avantageusement par plasma mais aussi par d'autres systèmes connus, y compris par laser.

L'invention concerne également une soufflante de turbo-réacteur comprenant un disque rotatif et des aubes montées à la périphérie de ce disque, ledit disque comportant des alvéoles dans lesquelles sont engagées des pieds d'aubes, caractérisée en ce qu'au moins les zones de contact des pieds d'aubes sont recouvertes d'un revêtement comprenant une couche d'un matériau auto-lubrifiant composite constitué exclusivement de particules de graphite enrobées dans une matrice de nickel.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- la figure 1 illustre la structure d'un grain de poudre destiné à former une couche d'un matériau auto-lubrifiant composite à la surface d'une pièce métallique à protéger ;
- la figure 2 est une vue schématique en coupe de la surface traitée conformément à l'invention ;
- la figure 3 illustre la mise en oeuvre d'une étape du procédé pour le traitement d'un pied d'aube ; et
- la figure 4 illustre schématiquement et partiellement une soufflante conforme à l'invention.

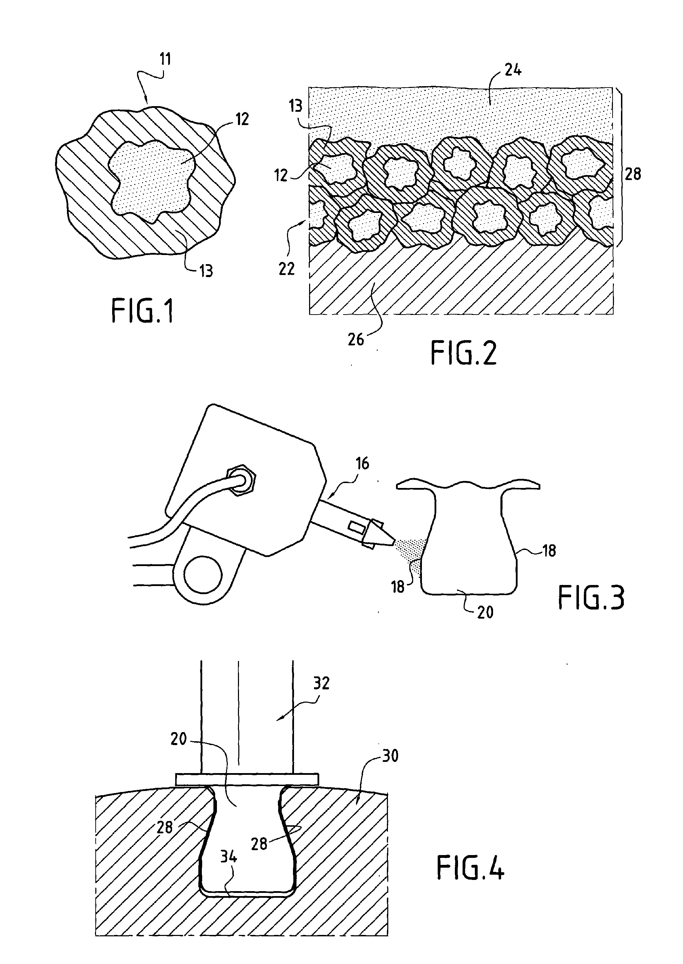

Pour la mise en oeuvre de l'invention, on utilise de préférence une poudre, connue en soi, dont chaque grain 11 a la structure représentée sur la figure 1, à savoir une particule de graphite 12 enrobée de nickel 13. Des résultats satisfaisants ont été obtenus à partir d'une telle poudre ayant une granulométrie comprise entre 20 et 100µm. La proportion en poids de graphite peut être comprise entre 10 et 40 %.

Cependant, la granulométrie peut être beaucoup plus faible, de taille nanométrique, à condition d'adapter le procédé de projection thermique, qui sera décrit plus loin, à cette granulométrie.

Dans le mode de réalisation plus particulièrement décrit, on met en oeuvre une projection thermique de poudre, avantageusement une projection plasma. Cette projection (figure 3) est effectuée, à l'aide d'une torche à plasma 16 classique, sur les zones de contact 18 des pieds d'aubes 20. On rappelle que ces pieds d'aubes sont les parties des aubes de la soufflante qui sont engagées dans des alvéoles d'un disque-rotor de ladite soufflante. Comme représenté sur la figure 2, la projection de cette poudre, à chaud, aboutit à la formation d'une couche de matériau auto-lubrifiant composite 22 sur les zones de contact en question, qui est donc constituée de particules de graphite réparties dans une matrice de nickel. En effet, au cours de la projection thermique, les grains se soudent entre eux par fusion du nickel de sorte que la couche du matériau auto-lubrifiant comporte dans son épaisseur une multitude de particules de graphite régulièrement reparties au sein du nickel.

Le procédé peut être complété par une projection, à la surface du matériau auto-lubrifiant composite ainsi déposé, d'un autre matériau lubrifiant solide 24 formant une couche uniforme adhérant à la surface de la couche nickel-graphite 22. Cet autre matériau lubrifiant solide peut être le bisulfure de molybdène ou le graphite, notamment ou un mélange des deux. Il adhère bien sur la couche nickel-graphite préalablement déposée. L'épaisseur de ce lubrifiant solide supplémentaire peut être comprise entre 10 et 50 microns.

Cette couche supplémentaire améliore l'action lubrifiante de la couche nickel-graphite, cette dernière ne commençant à agir pleinement que lorsque le lubrifiant solide homogène est consommé. La durée de vie du contact avant toute dégradation se trouve ainsi augmentée. Des essais ont montrés que la durée de vie de la turbo-soufflante, avant réparation des pieds d'aubes pouvait être multipliée par dix, avec ce nouveau type de revêtement 28 comprenant au moins la couche 22, de préférence la couche 24 et éventuellement la sous-couche d'adhérence (non représentée).

La couche nickel-graphite 22 peut avoir une épaisseur comprise entre 50 et 200 µm. Elle peut être déposée directement sur le substrat métallique 26, à savoir sur le métal constituant le pied d'aube 20, en l'occurrence ici un alliage de titane. Néanmoins, si on veut augmenter l'adhérence entre la couche de nickel-graphite et le substrat métallique, on peut projeter (avant le dépôt de la couche nickel-graphite) une sous-couche d'adhérence, par exemple de nickel-aluminium.

L'invention concerne également une soufflante de turbo-réacteur comprenant un disque rotatif 30 et des aubes 32 montées à la périphérie de ce disque. Le disque comporte des alvéoles 34 dans lesquelles sont engagés des pieds d'aubes et les zones de contact de ces pieds d'aubes sont recouvertes d'un revêtement 28 conforme à la description qui précède, comprenant au moins une couche d'un matériau auto-lubrifiant composite constituée exclusivement de particules de graphites réparties dans une matrice de nickel. Le revêtement peut comprendre une autre couche de lubrifiant solide recouvrant la couche de matériau auto-lubrifiant composite (conformément à la figure 2). Cette autre couche peut comporter du graphite et/ou du bisulfure de molybdène.

Une sous-couche d'adhérence, par exemple en nickel-alumunium, peut être déposée sur le pied d'aube (classiquement en alliage de titane) sous la couche de matériau auto-lubrifiant composite décrite ci-dessus.

Des essais comparatifs ont été effectués dans les conditions suivantes. Des pieds d'aubes de soufflante ont été traités comme indiqué ci-dessus. D'autres ont été revêtus de CuNiln classique. Les aubes ont été montées sur un même disque qui a été expérimenté sur moteur pendant 8000 cycles. Après cette période, les pieds d'aubes revêtus de CuNiln sont apparus endommagés par de l'usure et des écaillages du revêtement tandis que les pieds d'aubes traités selon l'invention n'avaient subi aucune dégradation.

Pour le dépôt de NiGr, les conditions opératoires suivantes ont donné satisfaction :
- projection du plasma : 400A sous 55V
- granulométrie de la poudre de NiGr : 50 microns
- distance buse-pièce : 120 mm
- vitesse de projection : 320 mm/s
- déplacement entre deux passes : 6 mm
- épaisseur de la couche 150 microns

## Revendications

1. Procédé de protection des surfaces de contact entre deux pièces métalliques sujettes à des mouvements relatifs de faible amplitude, **caractérisé en ce qu'**il comporte une opération consistant à recouvrir au moins l'une desdites surfaces d'un matériau auto-lubrifiant composite (22) constitué exclusivement de particules de graphite (12) réparties dans une matrice de nickel (13).

2. Procédé selon la revendication 1, **caractérisé en ce qu'**on recouvre d'un tel matériau auto-lubrifiant les zones de contact (18) de pieds d'aubes d'un compresseur de turboréacteur.

3. Procédé selon l'une des revendications précédentes, **caractérisé en ce qu'**il consiste à mettre en oeuvre une projection thermique de poudre (11), les grains de ladite poudre étant constitués de particules de graphite (12) enrobées de nickel (13).

4. Procédé selon la revendication 3, **caractérisé en ce que** ladite projection thermique est une projection plasma.

5. Procédé selon la revendication 3 ou 4, **caractérisé en ce que** la granulométrie de ladite poudre est comprise entre 20 et 100 µm.

6. Procédé selon l'une des revendications précédentes, **caractérisé en ce que** la proportion en poids de graphite est comprise entre 10 et 40%.

7. Procédé selon l'une des revendications précédentes, **caractérisé en ce qu'**il comprend une opération consistant à déposer une sous-couche d'adhérence sur la pièce métallique, avant application dudit matériau auto-lubrifiant.

8. Procédé selon la revendication 7, **caractérisé en ce que** ladite sous-couche d'adhérence est du nickel-aluminium.

9. Procédé selon l'une des revendications précédentes, **caractérisé en ce qu'**il comporte une opération consistant à projeter sur la surface dudit matériau auto-lubrifiant composite (22) au moins un autre matériau lubrifiant solide (24).

10. Procédé selon la revendication 9, **caractérisé en ce qu'**un tel matériau lubrifiant solide (24) comporte du bisulfure de molybdène.

11. Procédé selon la revendication 9, **caractérisé en ce qu'**un tel matériau lubrifiant solide (24) comporte du graphite.

12. Soufflante de turboréacteur comprenant un disque rotatif (30) et des aubes (32) montés à la périphérie de ce disque, ledit disque comportant des alvéoles (34) dans lesquelles sont engagées des pieds d'aubes, **caractérisée en ce qu'**au moins les zones de contact (18) des pieds d'aubes (20) sont recouvertes d'un revêtement (28) comprenant une couche d'un matériau auto-lubrifiant composite constitué exclusivement de particules de graphite enrobées dans une matrice de nickel.

13. Soufflante selon la revendication 12, **caractérisée en ce que** ledit revêtement comporte une sous-couche d'adhérence, par exemple en nickel-aluminium.

14. Soufflante selon la revendication 12, **caractérisée en ce que** ledit revêtement comprend une autre couche de lubrifiant solide (24) recouvrant ladite couche de matériau auto-lubrifiant composite.

15. Soufflante selon la revendication 14, **caractérisée en ce que** cette autre couche comporte du graphite et/ou du bisulfure de molybdène.
